# EUROPÄISCHE PATENTSCHRIFT

(11) **EP 2 677 217 B1**
(45) Veröffentlichungstag und Bekanntmachung des Hinweises auf die Patenterteilung: **21.01.2015**
(21) Anmeldenummer: 13172959.2
(22) Anmeldetag: 20.06.2013
(51) Int. Cl.: F16K 31/08

(54) **Elektromagnetisches Ventil für ein Füllorgan einer Getränkeabfüllanlage**
Electromagnetic valve for a filling unit of a beverage filling machine
Soupape électromagnétique pour un organe de remplissage d'une installation de remplissage de boissons

(30) Priorität: 20.06.2012 DE 102012105347
(43) Veröffentlichungstag der Anmeldung: 25.12.2013
(73) Patentinhaber: Krones AG, 93073 Neutraubling (DE)
(72) Erfinder: Doblinger, Josef, 93073 Neutraubling (DE)
(74) Vertreter: Nordmeyer, Philipp Werner

(56) Entgegenhaltungen:
- EP-A1- 1 266 862
- EP-A2- 2 194 302
- WO-A2-2011/028006
- DE-A1- 19 623 162
- DE-A1-102009 002 215
- FR-A1- 2 377 564
- US-A- 3 751 086
- US-A1- 2009 159 823

## Beschreibung

### Technisches Gebiet

Die vorliegende Erfindung betrifft ein elektromagnetisches Ventil für ein Füllorgan einer Getränkeabfüllanlage, beispielsweise zum Schalten eines Produktstroms oder zum Schalten eines Gasstroms und/oder eines anderen Fluidstroms zum Spülen, Entlüften, Vorspannen, Evakuieren, Entlasten und/oder Reinigen eines Behälters oder des Füllorgans.

### Stand der Technik

In herkömmlichen Getränkeabfüllanlagen werden Ventile in unterschiedlichen Bereichen eingesetzt, um Fluidströme zu steuern. Insbesondere werden Ventile im Bereich des Füllorgans einer Getränkeabfüllanlage beispielsweise als Produktventil zum Schalten des Produktstromes in den zu befüllenden Behälter vorgesehen. Weiterhin sind üblicherweise Ventile am Füllorgan für das Gasmanagement vorgesehen. So ist es beispielsweise beim Befüllen von Behältern mit karbonisierten Getränken üblich, den Behälter vor dem Befüllen mit einem Spanngas, beispielsweise CO₂, vorzuspannen, um ein übermäßiges Aufschäumen des abzufüllenden, karbonisierten Getränks beim Einfüllen in den Behälter zu vermeiden und entsprechend einen sicheren und definierten Abfüllvorgang bereitzustellen. Nach einem solchen Füllvorgang mit einem vorgespannten Behälter, insbesondere beim Befüllen mit einem karbonisierten Getränk, muss der Behälter dann wieder definiert entlastet werden, um dem Bruch des Behälters durch eine schlagartige Entlastung vorzubeugen und um ein unkontrollierbares Überschäumen beziehungsweise Herausspritzen des Getränks bei der Druckentlastung zu verhindern. Weiterhin ist es bekannt, den jeweiligen, mit Produkt zu befüllenden Behälter mit einem Spülgas vorzuspülen, um Luftsauerstoff aus dem Behälter zu verdrängen, um entsprechend die Haltbarkeit des abzufüllenden Produktes zu erhöhen.

Diese Vorgänge des Schaltens unterschiedlicher Produkt-, Gas- und Fluidströme in dem Füllorgan wurden bislang über Membranventile durchgeführt, welche pneumatisch geschaltet werden. Hierbei gibt eine elektronische Füllorgansteuerung ein elektrisches Signal aus, welches ein so genanntes Vorsteuerventil zur Durchschaltung bringt. Dieses Vorsteuerventil beaufschlagt dann das eigentliche Membranventil über entsprechende Druckluftleitungen mit Druckluft, um das Produkt, das Spanngas, das Spülgas, die Entlastung und andere Vorgänge im Füllorgan zu schalten. Entsprechend schließt oder öffnet das entsprechende Membranventil seinerseits dann auf Grundlage des über das Vorsteuerventil gesteuerten Druckluftdruckes den entsprechenden Produkt- beziehungsweise Gaskanal.

Die elektronische Steuereinheit und die jeweiligen Vorsteuerventile sind meist an einem zentralen Steuerungsturm des Füllerkarussells der Getränkeabfüllanlage vorgesehen.

Die Ansteuerung der jeweiligen Membranventile im Füllorgan mittels über die entsprechenden Pneumatikschläuche zugeführter Druckluft führt unter anderem aufgrund unterschiedlich langer Pneumatikschläuche zu unterschiedlichen Reaktionszeiten der Ventile. Aufgrund der Konstruktion beispielsweise eines Rundläuferfüllers finden zur Ansteuerung der Ventile in den unterschiedlichen Füllorganen unterschiedlich lange Pneumatikschläuche Anwendung, so dass entsprechend die über kürzere Schläuche angesteuerten Membranventile schneller schalten, als die über längere Schläuche angesteuerten Membranventile. Diese Schaltzeitvarianzen können zu Ungenauigkeiten beim Abfüllvorgang führen.

Darüber hinaus kann durch die Verwendung von Druckluft zur Ansteuerung der Membranventile entsprechend Druckluft in die Abfüllbereiche gelangen, was unter hygienischen Aspekten unerwünscht sein kann.

Das Bereitstellen von Druckluft zur Betätigung der pneumatischen Antriebe benötigt darüber hinaus vergleichsweise viel Energie. Daneben sind jeweils zwei Ventile, nämlich das eigentliche Membranventil sowie das zugeordnete Vorsteuerventil, zur Steuerung der jeweiligen Fluidflüsse vorhanden, wodurch die Fehleranfälligkeit steigt.

In der FR 2377564 A1 ist ein Ventil gezeigt, das elektromagnetisch betrieben wird.

Die EP 2194302 A2 offenbart ein Ventil, das elektromagnetisch gesteuert wird.

Die WO 2011/028006 A2 zeigt ein Ventil, bei dem das Magnetfeld, welches ein Ventil steuert, durch die Stromrichtung geändert wird.

Die US 2009/0159823 A1 offenbart ein mechanisches Ventil zum binären Schalten von zwei Gaswegen.

Aus der DE 196 23 162 A1 ist ein Magnetventil bekannt, bei welchem ein Ventilstößel aus einem permanentmagnetischen Material mit einem an dem Gehäuse des Magnetventils angeordneten permanentmagnetischen Anker wechselwirkt.

### Darstellung der Erfindung

Ausgehend von dem vorbekannten Stand der Technik ist es eine Aufgabe der vorliegenden Erfindung, ein elektromagnetisches Ventil für ein Füllorgan anzugeben, mittels welchem ein vereinfachter Aufbau einer Getränkeabfüllanlage erreicht werden kann.

Diese Aufgabe wird durch ein elektromagnetisches Ventil für ein Füllorgan mit den Merkmalen des Anspruchs 1 gelöst. Vorteilhafte Weiterbildungen ergeben sich aus den abhängigen Ansprüchen.

Entsprechend umfasst das elektromagnetische Ventil einen Ventilkörper, in welchem ein erster Kanal mit einem zweiten Kanal über eine Fluidverbindung verbunden ist, wobei die Fluidverbindung einen Ventilsitz zur Aufnahme einer Dichtfläche eines in der Fluidverbindung beweglich angeordneten Ventilstößels aufweist, und wobei der Ventilstößel einen Permanentmagneten aufweist. Erfindungsgemäß ist am Ventilkörper eine auf den Permanentmagneten des Ventilstößels wirkende, elektromagnetische Spule zum Abheben des Ventilstößels vom Ventilsitz vorgesehen.

Dadurch, dass der Ventilstößel einen Permanentmagneten aufweist und am Ventilkörper eine auf den Permanentmagneten des Ventilstößels wirkende elektromagnetische Spule zum Abheben des Ventilstößels vom Ventilsitz vorgesehen ist, kann durch unmittelbares direktes Beaufschlagen der elektromagnetischen Spule mit einem von einer Ventilsteuervorrichtung ausgegebenen Steuersignal ein Öffnen und Schließen des elektromagnetischen Ventils erreicht werden. Auf diese Weise kann der im Stand der Technik verwendete Einsatz von Druckluft mit den damit verbundenen Herausforderungen, wie beispielsweise Schaltzeitvariationen oder hoher Energieeinsatz aufgrund der benötigten Kompressorleistung, vermieden werden. Weiterhin reduzieren sich auch die Kosten bei der Überholung des jeweiligen Füllorgans beziehungsweise der jeweiligen Getränkeabfüllanlage, da lediglich nur noch ein einziges Ventil, nämlich das genannte elektromagnetische Ventil, überprüft werden muss. Auf die vormals aufwändige Auslegung mit einem Vorsteuerventil, Pneumatikschläuchen und den nachgeordneten eigentlichen Membranventilen kann auf diese Weise verzichtet werden. Hierdurch wird der gesamte Aufbau der Abfüllanlage vereinfacht.

Die jeweilige Ventilsteuervorrichtung kann entsprechend direkt die elektromagnetische Spule ansprechen, über welche das beschriebene elektromagnetische Ventil angesteuert wird, und so eine unmittelbare Öffnung beziehungsweise Schließung der jeweiligen Gas- beziehungsweise Medienkanäle erreichen. Damit können aufgrund des Verzichts auf die aus dem Stand der Technik bekannten, unterschiedlich langen Pneumatikschläuche auch Schaltzeitvarianzen reduziert beziehungsweise vollkommen vermieden werden, so dass die Schaltung der jeweiligen Fluide deutlich präzisiert wird.

Weiterhin kann die Hygiene innerhalb der Abfüllanlage verbessert werden, da aufgrund der direkten elektrischen Ansteuerung der elektromagnetischen Spule keine Pneumatikluft beziehungsweise Arbeitsluft in den Füllorganen verwendet wird, welche in entsprechende Füllbereiche beziehungsweise Isolatoren oder aseptische Füllkammern entweichen könnte.

Dadurch, dass der Ventilstößel in der Fluidverbindung beweglich angeordnet ist, kann der Ventilstößel in einer besonders bevorzugten Ausbildungsform auch vollkommen in der Fluidverbindung, also vollständig innerhalb des Ventilkörpers, liegen. Entsprechend sind bewegliche Teile des elektromagnetischen Ventils außerhalb des Ventilkörpers nicht vorgesehen, so dass auf eine Abdichtung mittels eines verschleißanfälligen und entsprechend teuren Balges verzichtet werden kann. Mit anderen Worten kann auf teure Verschleißteile im Bereich der vorgeschlagenen elektromagnetischen Ventile verzichtet werden.

Durch das vorgeschlagene elektromagnetische Ventil für das Füllorgan kann entsprechend eine direkte Ansteuerung verwirklicht werden, wobei die Hygiene verbessert werden kann, der Energieaufwand, welcher für den Betrieb des Ventils benötigt wird, deutlich gegenüber den herkömmlichen pneumatischen Ventilen reduziert werden kann, die laufenden Betriebskosten reduziert werden können, da insbesondere bei einem vollständig innerhalb des Ventilkörpers liegenden Ventilstößel auf teure Verschleißteile, wie beispielsweise Bälge, verzichtet werden kann, und entsprechend ein zuverlässiger Betrieb des elektromagnetischen Ventils ermöglicht wird.

Weiterhin ist durch den entsprechenden magnetischen Antrieb dergestalt, dass der Ventilstößel lediglich mit einem Permanentmagneten bestückt ist, keine Verbindung des Ventilstößels mit irgendeinem anderen Bauteil beziehungsweise einer anderen Komponente des elektromagnetischen Ventils notwendig. Insbesondere muss der Ventilstößel nicht elektrisch oder steuerungstechnisch an andere Komponenten angebunden werden. Durch diese quasi autarke Auslegung des Ventilstößels kann dieser hygienisch und strömungstechnisch für den jeweiligen Einsatzzweck optimiert werden. Dabei ist besonders eine vollständige Reinigung und Sterilisierung des Ventilstößels möglich, da der Ventilstößel im Wesentlichen vollständig von den entsprechenden Reinigungs- und Sterilisierungsfluiden umspülbar ist.

Über die stationär am Ventilkörper angeordnete elektromagnetische Spule kann eine zuverlässige und direkte Ansteuerung des Ventils erreicht werden. Mittels des von der von einem entsprechenden Steuerstrom durchflossenen elektromagnetischen Spule erzeugten Magnetfeldes kann über den Permanentmagneten des Ventilstößels dieser aus dem Ventilsitz herausgehoben werden, so dass über die Fluidverbindung ein Fluidstrom zwischen dem ersten und dem zweiten Kanal hergestellt wird.

In einer bevorzugten Weiterbildung ist die Dichtfläche des Ventilstößels beabstandet vom Permanentmagneten angeordnet, wobei in einer besonders bevorzugten Ausprägung der Ventilsitz zwischen der Dichtfläche und dem Permanentmagneten angeordnet ist. Mit anderen Worten ist der Permanentmagnet bevorzugt am stromabwärts liegenden Ende des Ventilstößels angeordnet und die Dichtfläche, welche mit dem Ventilsitz in Verbindung kommt, am stromaufwärts gelegenen Ende des Ventilstößels. Hierdurch lässt sich erreichen, dass der Druck des Fluids, beispielsweise des Gases oder des mit dem Füllorgan abzufüllenden Produktes, den Ventilstößel auf den Ventilsitz presst, solange der Permanentmagnet nicht durch ein von der elektromagnetischen Spule induziertes Magnetfeld zum Abheben vom Ventilsitz gebracht wird.

In einer weiteren bevorzugten Weiterbildung ist die Dichtfläche des Ventilstößels zur Unterbrechung eines Fluidflusses in der Fluidverbindung in Richtung des Ventilsitzes vorgespannt. Durch die Vorspannung in Verschließrichtung kann entsprechend bei einer stromlos geschalteten elektromagnetischen Spule ein sicheres Verschließen des Ventils erreicht werden. Dadurch wird sicher gestellt, dass ein ungewolltes Herausfließen des mit dem elektromagnetischen Ventils geschalteten Fluids nicht auftritt. Damit wird beispielsweise auch bei einem Stromausfall stets ein sicherer Betriebszustand eingenommen. Des Weiteren kann so die Energie, welche zum Betrieb des elektromagnetischen Ventils aufgewendet wird, reduziert werden, da zumindest bei geschlossenem Ventil keine Energie zum Halten des Ventils in der Verschließstellung aufgewendet werden muss. Besonders bevorzugt in diesem Zusammenhang ist der Ventilstößel so dimensioniert und/oder orientiert, dass er aufgrund seines Eigengewichtes bei stromloser elektromagnetischer Spule den Fluidfluss in der Fluidverbindung unterbricht. Dabei ist der Ventilstößel dann so angeordnet, dass er im Wesentlichen senkrecht innerhalb des Ventilkörpers angeordnet ist und die Dichtfläche des Ventilstößels durch sein Eigengewicht auf den Ventilsitz des Ventilkörpers hin vorspannt.

In einer Variante oder Ergänzung kann der Ventilstößel bevorzugt einen zweiten Permanentmagneten aufweisen, welcher mit einem dritten, am Ventilkörper angeordneten Permanentmagneten wechselwirkt und die Dichtfläche des Ventilstößels in Richtung des Ventilsitzes vorspannt. Der zweite Permanentmagnet am Ventilstößel ist dabei bevorzugt stromaufwärts der Dichtfläche des Ventilstößels angeordnet und spannt den Ventilstößel in Richtung des Ventilsitzes vor, wenn er mit dem am Ventilkörper angeordneten dritten Permanentmagneten wechselwirkt. Entsprechend wird der Ventilstößel bevorzugt in Verschlussrichtung über den zweiten und dritten Permanentmagneten vorgespannt. Auch diese Vorspannung des Ventilstößels in die Verschlussrichtung wird ohne mechanische Verbindung des Ventilstößels nach außen erreicht, so dass auch hier auf eine aufwändige Abdichtung beziehungsweise Abschirmung, beispielsweise mittels eines Balges, sowie auf Durchführungen für mechanische oder elektrische Betätigungsmittel vollständig verzichtet werden kann. Entsprechend ergibt sich auf die genannte Weise ein elektromagnetisches Ventil, welches zuverlässig in die Verschlussrichtung vorgespannt ist, und welches auf einfache Weise über das Beaufschlagen der elektromagnetischen Spule mit einem von der elektronischen Ventilsteuervorrichtung ausgegebenen elektrischen Signals angesteuert werden kann.

Der Ventilstößel ist bevorzugt hantelförmig ausgebildet, wobei der Ventilsitz dann zwischen den beiden Enden des Ventilstößels angeordnet ist. Am stromaufwärts gelegenen Ende des hantelförmigen Ventilstößels ist bevorzugt der zweite Permanentmagnet angeordnet, welcher mittels des oben genannten dritten Permanentmagneten, der am Ventilkörper fest angeordnet ist, so wechselwirkt, dass der Ventilstößel in die Verschlussrichtung vorgespannt wird. Am stromabwärts gelegenen Ende des hantelförmigen Ventilstößels ist bevorzugt der erste Permanentmagnet angeordnet, mittels welchem der Ventilstößel beziehungsweise die Dichtfläche des Ventilstößels aus dem Ventilsitz abgehoben werden kann, um das elektromagnetische Ventil zu öffnen.

Besonders bevorzugt ist das oben beschriebene elektromagnetische Ventil zur Bereitstellung von Vorspanngas, bevorzugt CO₂, Spülgas, zur Druckentlastung, zum Aufbringen eines Vakuums, und/oder zum Schalten eines Produktstromes für einen zu befüllenden Behälter eingerichtet. Mit anderen Worten ist es derart dimensioniert, dass ein sicheres Schalten der entsprechenden Fluide bei für eine Getränkeabfüllanlage üblichen Fluidströmen möglich ist.

Die oben genannte Aufgabe wird weiterhin durch ein Füllorgan für eine Getränkeabfüllanlage mit mindestens einem Produktventil zum Schalten des Produktstromes und/oder mit mindestens einem Gasventil zum Schalten eines Gasstromes gelöst, wobei mindestens ein Gasventil und/oder Produktventil als elektromagnetisches Ventil, so wie es vorstehend beschrieben ist, ausgebildet ist. Auf diese Weise wird erreicht, dass das Füllorgan unmittelbar über eine elektronische Füllorgansteuerung angesteuert werden kann. Entsprechend kann eine unmittelbare Ansteuerung erreicht werden, so dass Schaltzeitvarianzen verringert werden beziehungsweise vollkommen entfallen, ein energieeffizienterer Betrieb des Füllorgans möglich ist, die Hygiene des Füllorgans verbessert werden kann, sowie auf verschleißanfällige Bauteile, wie beispielsweise Bälge, verzichtet werden kann.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische seitliche Schnittansicht durch ein elektromagnetisches Ventil gemäß einem Ausführungsbeispiel der vorliegenden Erfindung;
- Figur 2: eine schematische Darstellung eines in einer Getränkeabfüllanlage angeordneten Füllorgans; und
- Figur 3: eine schematische Darstellung der Schaltung des elektromagnetischen Ventils.

### Detaillierte Beschreibung bevorzugter Ausführungsbeispiele

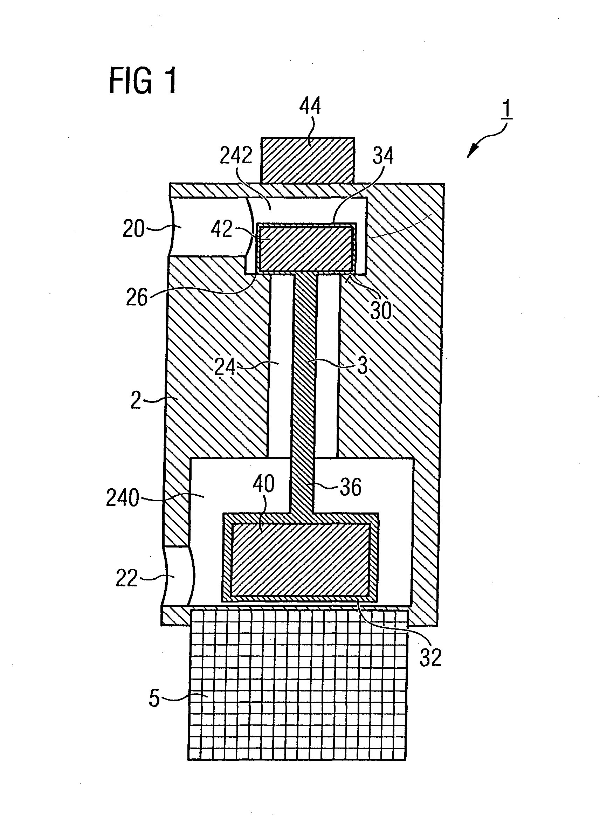

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden. In Figur 1 ist eine schematische seitliche Schnittdarstellung eines elektromagnetischen Ventils 1 für ein Füllorgan gezeigt. Dabei ist ein Ventilkörper 2 vorgesehen, in welchem ein erster Kanal 20, ein zweiter Kanal 22, sowie eine den ersten Kanal 20 und den zweiten Kanal 22 verbindende Fluidverbindung 24 vorgesehen sind. Üblicherweise wird über den ersten Kanal 20 ein zu schaltendes Fluid, beispielsweise das zu schaltende Produkt oder Gas, in den Ventilkörper 2 eingebracht und das geschaltete Fluid wird dann über den zweiten Kanal 22 zur weiteren Verarbeitung geführt, beispielsweise in einen zu befüllenden Behälter eingeleitet. Je nach zu schaltendem Fluid ist der am Ventil anliegende Fluiddruck im Kanal 20 wenigstens so groß wie der Druck im Kanal 22.

Entsprechend ist an dem ersten Kanal 20 beispielsweise der Produktkessel oder eine Zuführung von Spanngas in Form von CO₂ angeschlossen. An dem zweiten Kanal 22 folgt üblicherweise der jeweilige Anschluss an einen zu befüllenden Behälter.

Ein Ventilstößel 3 ist in der Fluidverbindung 24 aufgenommen, wobei der Ventilstößel 3 eine Dichtfläche 30 aufweist, welche in einem Ventilsitz 26 des Ventilkörpers 2 aufgenommen werden kann. Die Dichtfläche 30 verschließt die Fluidverbindung 24, wenn sie auf dem Ventilsitz 26 aufsitzt. Mit anderen Worten kann die Verbindung zwischen dem ersten Kanal 20 und dem zweiten Kanal 22 mittels des Ventilstößels 3, und insbesondere mittels der Dichtfläche 30 des Ventilstößels 3, unterbrochen werden.

Der Ventilstößel 3 ist in dem in Figur 1 gezeigten Ausführungsbeispiel im Wesentlichen hantelförmig ausgebildet, wobei an dem stromabwärts gelegenen Ende 32 des Ventilstößels 3 ein erster Permanentmagnet 40 vorgesehen ist. Der Permanentmagnet 40 ist in einer entsprechenden Kammer 240 der Fluidverbindung 24 aufgenommen, derart, dass der Permanentmagnet 40 von dem jeweiligen zu schaltenden Fluid umströmt werden kann.

An dem stromaufwärts gelegenen Ende 34 des Ventilstößels 3 ist ein zweiter Permanentmagnet 42 vorgesehen, welcher ebenfalls in einer Kammer 242 der Fluidverbindung 24 so aufgenommen ist, dass er von dem zu schaltenden Fluid umströmt werden kann.

Das stromabwärts gelegene Ende 32 und das stromaufwärts gelegene Ende 34 des Ventilstößels 3 sind durch eine Stößelstange 36 miteinander verbunden, derart, dass sich die bereits genannte hantelförmige Ausbildung des Ventilstößels 3 ergibt. An der Unterseite des zweiten Permanentmagneten 42 ist entsprechend auch die Dichtfläche 30 ausgebildet.

In einer nicht gezeigten Variante, in welcher der zweite Permanentmagnet 42 nicht verwendet wird, kann die Dichtfläche 30 durch eine entsprechend ausgebildete Scheibe, welche mit der Stößelstange 36 verbunden ist, gehalten werden.

In dem in Figur 1 gezeigten Ausführungsbeispiel ist der Ventilsitz 26 des Ventilkörpers 2 zwischen dem ersten Permanentmagneten 40 und dem zweiten Permanentmagneten 42 angeordnet, so dass sich der Ventilstößel 3 über den Ventilsitz 26 hinaus stromabwärts erstreckt.

Die Dichtfläche 30 des Ventilstößels 3 kann vom Ventilsitz 26 abgehoben werden, indem eine elektromagnetische Spule 5, welche gegenüberliegend dem ersten Permanentmagneten 40 am Ventilkörper 2 festgelegt ist, mit Strom durchflossen wird und ein entsprechendes abstoßendes Magnetfeld auf den ersten Permanentmagneten 40 ausgeübt wird. In dem in Figur 1 gezeigten Ausführungsbeispiel kann der Ventilstößel 3 durch ein auf solche Weise erzeugtes Magnetfeld so angehoben werden, dass die Dichtfläche 30 des Ventilstößels 3 aus dem Ventilsitz 26 abgehoben wird und entsprechend das zu schaltende Fluid über den ersten Kanal 20 am Ventilsitz 26 vorbei durch die Fluidverbindung 24 und aus dem zweiten Kanal 22 herausströmen kann. Entsprechend wird durch das Aufbringen eines entsprechend gerichteten Stromes auf die elektromagnetische Spule 5 das Ventil 1 von der geschlossenen in die geöffnete Stellung geschaltet.

Wenn die elektromagnetische Spule 5 wieder stromlos ist, fällt der Ventilstößel 3 bereits aufgrund seines Eigengewichtes wieder auf den Ventilsitz 26, so dass zwischen der Dichtfläche 30 und dem Ventilsitz 26 wieder eine entsprechende Abdichtung vorliegt, welche das Ventil 1 verschließt.

In dem in Figur 1 gezeigten Ausführungsbeispiel reicht das Eigengewicht des Ventilstößels 3 dazu aus, den Ventilstößel 3 mit der Dichtfläche 30 auf den Ventilsitz 26 so aufzulegen, dass das Ventil in die Schließstellung fällt. Aufgrund des typischerweise höheren Drucks, welcher am ersten Kanal 20 anliegt, wird der Ventilstößel 3 dann entsprechend weiter auf den Ventilsitz 26 gedrückt, so dass hier eine zuverlässige Abdichtung stattfindet.

Dennoch ist gegenüber dem zweiten Permanentmagneten 42 ein dritter Permanentmagnet 44 am Ventilkörper 2 vorgesehen, welcher so orientiert ist, dass er den zweiten Permanentmagneten 42 des Ventilstößels 3 abstößt. Auf diese Weise wird eine Vorspannung des Ventilstößels 3 in die Verschlussrichtung, nämlich die Richtung, in welcher die Dichtfläche 30 auf den Ventilsitz 26 aufgepresst wird, ausgeübt. Damit wird zuverlässig erreicht, dass sich das Ventil 1 stets in einem definierten, geschlossenen Zustand befindet, wenn die elektromagnetische Spule 5 stromlos ist oder eine bestimmte Stromschwelle noch nicht überschritten hat. Alternativ zur dargestellten Ausführungsform kann der dritte Permanentmagnet 44 auch ringförmig um die Fluidverbindung 24 angeordnet sein und entsprechend eine Anziehungskraft auf den zweiten Permanentmagneten 42 ausüben.

Sowohl die elektromagnetische Spule 5 als auch der dritte Permanentmagnet 44 liegen außerhalb der Fluidverbindung 24 fest am Ventilkörper 2 an. Da hier keinerlei Relativbewegung zwischen dem Ventilkörper 2 und der elektromagnetischen Spule 5 beziehungsweise dem dritten Permanentmagneten 44 auftritt, sind aufwändige Abdichtungen, beispielsweise über Bälge, nicht notwendig.

Der Ventilstößel 3 selbst liegt vollständig innerhalb des Ventilkörpers 2 und liegt darüber hinaus auch vollständig innerhalb der Fluidverbindung 24, so dass auch hier eine Abdichtung gegenüber äußeren Komponenten nicht notwendig ist. Auf diese Weise können die hygienische Ausbildung des Ventils 1 sowie die Wartungskosten aufgrund der Abwesenheit von aufwändigen und verschleißanfälligen Dichtungsmechanismen reduziert werden.

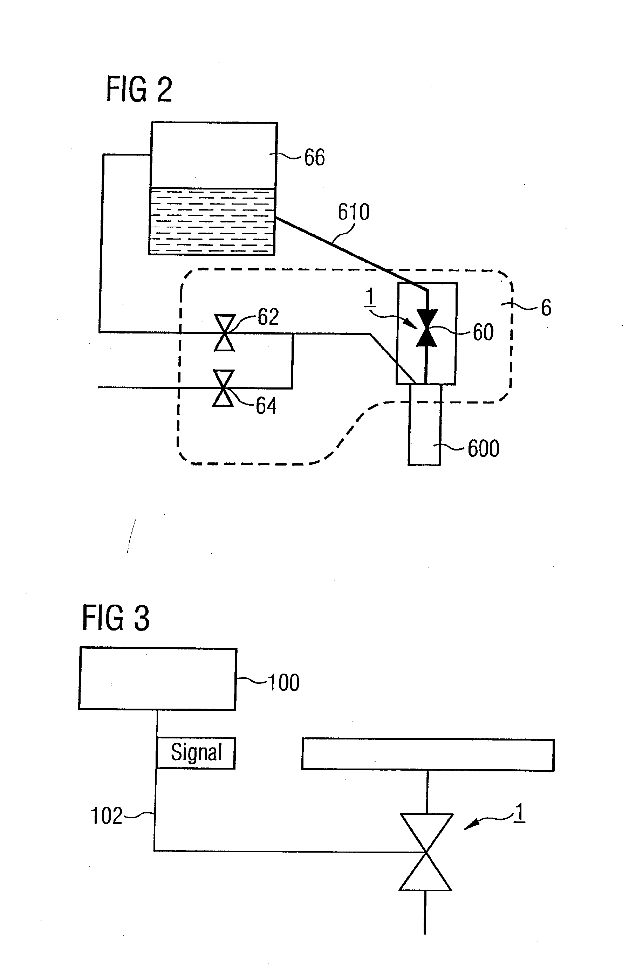

Figur 2 zeigt in einer schematischen Ansicht den Einsatz des elektromagnetischen Ventils 1 in einem Füllorgan 6, wobei das elektromagnetische Ventil 1 sowohl als Produktventil 60, als auch als Gasventil 62 und 64 vorgesehen ist. Das Füllorgan 6 dient dazu, den zu befüllenden Behälter 600, beispielsweise eine Flasche, mit dem aus einem Produktkessel 66 zugeführten Produkt zu befüllen. Hierfür wird das Produkt über eine Produktzuleitung 610 aus dem Produktkessel 66 dem Produktventil 60 zugeführt, welches geöffnet wird, wenn der Behälter 600 entsprechend vorbereitet ist.

Der Behälter 600 wird dazu entsprechend an das Füllorgan 6 angepresst und mittels des Gasventils 62 mit dem im Produktkessel 66 herrschenden Gasdruck beaufschlagt. Wenn die entsprechende Vorspannung erreicht ist, wird das Produktventil 60 geöffnet und das Produkt fließt in den zu befüllenden Behälter 600. Dabei fließt das durch das Produkt verdrängte Gas über das Ventil 62 wieder zurück in den Produktkessel 66. Nach Abschluss des Füllvorgangs wird sowohl das Produktventil 60 als auch das Gasventil 62 geschlossen. Der in dem Behälter 600 herrschende Überdruck wird über das weitere Gasventil 64 kontrolliert abgelassen. Der dann entlastete Behälter 600 kann vom Füllorgan abgezogen werden.

In Figur 3 ist schematisch die Ansteuerung eines elektromagnetischen Ventils 1 über eine elektronische Füllorgansteuerung 100 gezeigt, welche ein entsprechendes elektrisches Signal 102 an die in Figur 1 gezeigte elektromagnetische Spule 5 so anlegt, dass das Ventil 1 entsprechend geöffnet wird. Auf diese Weise wird das Vorsehen aufwändiger Druckluftleitungen sowie eines Vorsteuerventils und die Bereitstellung großer Mengen an Druckluft vermieden, wodurch zum einen Energie eingespart werden kann und zum anderen Schaltzeitvarianzen reduziert beziehungsweise vermieden werden können. Darüber hinaus wird auch keine Druckluft mehr in einen Reinraum beziehungsweise Aseptikraum eines entsprechenden Aseptikfüllers eingetragen.

Soweit anwendbar können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: elektromagnetisches Ventil
- 100: elektronische Füllorgansteuerung
- 102: elektrisches Signal
- 2: Ventilkörper
- 20: erster Kanal
- 22: zweiter Kanal
- 24: Fluidverbindung
- 26: Ventilsitz
- 240: Kammer der Fluidverbindung
- 242: Kammer der Fluidverbindung
- 3: Ventilstößel
- 30: Dichtfläche
- 32: stromabwärts gelegenes Ende des Ventilstößels
- 34: stromaufwärts gelegenes Ende des Ventilstößels
- 36: Stößelstange
- 40: erster Permanentmagnet
- 42: zweiter Permanentmagnet
- 44: dritter Permanentmagnet
- 5: elektromagnetische Spule
- 6: Füllorgan
- 60: Produktventil
- 62: Gasventil
- 64: Entlastungsventil
- 66: Produktkessel
- 600: Behälter
- 610: Produktzuleitung

## Patentansprüche

1. Elektromagnetisches Ventil (1) für ein Füllorgan (6), umfassend einen Ventilkörper (2), in welchem ein erster Kanal (20) mit einem zweiten Kanal (22) über eine Fluidverbindung (24) verbunden ist, wobei die Fluidverbindung (24) einen Ventilsitz (26) zur Aufnahme einer Dichtfläche (30) eines in der Fluidverbindung (24) beweglich angeordneten Ventilstößels (3) aufweist, wobei der Ventilstößel (3) einen Permanentmagneten (40) aufweist, wobei am Ventilkörper (2) eine auf den Permanentmagneten (40) des Ventilstößels (3) wirkende elektromagnetische Spule (5) zum Abheben des Ventilstößels (3) vom Ventilsitz (26) vorgesehen ist, wobei
der Ventilstößel (3) vollständig in der Fluidverbindung (24) liegt **dadurch gekennzeichnet, dass** der Ventilstößel vollständig von einem Fluid umspülbar ist.

2. Elektromagnetisches Ventil (1) gemäß Anspruch 1, **dadurch gekennzeichnet, dass** die Dichtfläche (30) des Ventilstößels (3) beabstandet vom Permanentmagneten (40) angeordnet ist.

3. Elektromagnetisches Ventil (1) gemäß Anspruch 1 oder 2, **dadurch gekennzeichnet, dass** der Ventilsitz (26) zwischen der Dichtfläche (30) des Ventilstößels (3) und dem Permanentmagneten (40) des Ventilstößels (3) angeordnet ist.

4. Elektromagnetisches Ventil (1) gemäß einem der vorstehenden Ansprüche, **dadurch gekennzeichnet, dass** die Dichtfläche (30) des Ventilstößels (3) zur Unterbrechung eines Fluidflusses in der Fluidverbindung (24) in Richtung des Ventilsitzes (26) vorgespannt ist.

5. Elektromagnetisches Ventil (1) gemäß Anspruch 4, **dadurch gekennzeichnet, dass** der Ventilstößel (3) so dimensioniert und/oder orientiert ist, dass er aufgrund seines Eigengewichtes bei stromloser elektromagnetischer Spule (5) den Fluidfluss in der Fluidverbindung (24) unterbricht.

6. Elektromagnetisches Ventil (1) gemäß Anspruch 4 oder 5, **dadurch gekennzeichnet, dass** der Ventilstößel (3) einen zweiten Permanentmagneten (42) aufweist, welcher mit einem dritten, am Ventilkörper (2) angeordneten Permanentmagneten (44) wechselwirkt und die Dichtfläche (30) des Ventilstößels (3) in Richtung des Ventilsitzes (26) vorspannt.

7. Elektromagnetisches Ventil (1) gemäß einem der vorstehenden Ansprüche, **dadurch gekennzeichnet, dass** der Ventilstößel (3) im Wesentlichen hantelförmig ausgebildet ist, wobei der Permanentmagnet (40) stromabwärts der Dichtfläche (30) des Ventilstößels (3) angeordnet ist, und der zweite Permanentmagnet (42) stromaufwärts der Dichtfläche (30) des Ventilstößels (3) angeordnet ist.

8. Elektromagnetisches Ventil (1) gemäß einem der vorstehenden Ansprüche, **dadurch gekennzeichnet, dass** es zur Bereitstellung von Vorspanngas, Spülgas, zur Druckentlastung, zum Aufbringen eines Vakuums, und/oder zum Schalten eines Produktstromes für einen zu befüllenden Behälter (600) eingerichtet ist.

9. Füllorgan (6) für eine Getränkeabfüllanlage mit mindestens einem Produktventil (60) zum Schalten des Produktstromes und/oder mindestens einem Gasventil (62, 64) zum Schalten eines Gasstromes,
**dadurch gekennzeichnet, dass**
mindestens ein Produktventil (60) und/oder Gasventil (62, 64) durch ein elektromagnetisches Ventil (1) gemäß einem der vorstehenden Ansprüche ausgebildet ist.

## Claims

1. Electromagnetic valve (1) for a filling unit (6), comprising a valve body (2) in which a first channel (20) is connected to a second channel (22) via a fluid connection (24), wherein the fluid connection (24) has a valve seat (26) for receiving a sealing surface (30) of a valve lifter (3) which is arranged moveably in the fluid connection (24), wherein the valve lifter (3) has a permanent magnet (40), wherein an electromagnetic coil (5) which acts on the permanent magnet (40) of the valve lifter (3) and is intended for lifting the valve lifter (3) from the valve seat (26) is provided on the valve body (2), wherein the valve lifter (3) lies completely in the fluid connection (24), **characterized in that** the valve lifter can be completely flushed around by a fluid.

2. Electromagnetic valve (1) according to Claim 1, **characterized in that** the sealing surface (30) of the valve lifter (3) is arranged spaced apart from the permanent magnet (40).

3. Electromagnetic valve (1) according to Claim 1 or 2, **characterized in that** the valve seat (26) is arranged between the sealing surface (30) of the valve lifter (3) and the permanent magnet (40) of the valve lifter (3).

4. Electromagnetic valve (1) according to one of the preceding claims, **characterized in that** the sealing surface (30) of the valve lifter (3) is pre-tensioned in the direction of the valve seat (26) in order to interrupt a fluid flow in the fluid connection (24).

5. Electromagnetic valve (1) according to Claim 4, **characterized in that** the valve lifter (3) is dimensioned and/or oriented in such a manner that, when the electromagnetic coil (5) is currentless, the dead weight of said valve lifter causes the latter to interrupt the fluid flow in the fluid connection (24).

6. Electromagnetic valve (1) according to Claim 4 or 5, **characterized in that** the valve lifter (3) has a second permanent magnet (42) which interacts with a third permanent magnet (44) arranged on the valve body (2) and pre-tensions the sealing surface (30) of the valve lifter (3) in the direction of the valve seat (26).

7. Electromagnetic valve (1) according to one of the preceding claims, **characterized in that** the valve lifter (3) is of substantially dumbbell-shaped design, wherein the permanent magnet (40) is arranged downstream of the sealing surface (30) of the valve lifter (3), and the second permanent magnet (42) is arranged upstream of the sealing surface (30) of the valve lifter (3).

8. Electromagnetic valve (1) according to one of the preceding claims, **characterized in that** said valve is designed in order to provide pressurisation gas, flushing gas, for pressure relief, for applying a vacuum, and/or for the connection of a stream of product for a container (600) to be filled.

9. Filling unit (6) for a beverage filling machine with at least one product valve (60) for connecting the stream of product, and/or at least one gas valve (62, 64) for the connection of a stream of gas,
**characterized in that**
at least one product valve (60) and/or gas valve (62, 64) is formed by an electromagnetic valve (1) according to one of the preceding claims.

## Revendications

1. Soupape électromagnétique (1) pour un organe de remplissage (6), comprenant un corps de soupape (2) dans lequel un premier canal (20) est connecté à un deuxième canal (22) par le biais d'une liaison fluidique (24), la liaison fluidique (24) présentant un siège de soupape (26) pour recevoir une surface d'étanchéité (30) d'un poussoir de soupape (3) disposé de manière mobile dans la liaison fluidique (24), le poussoir de soupape (3) présentant un aimant permanent (40), une bobine électromagnétique (5), agissant sur l'aimant permanent (40) du poussoir de soupape (3), étant prévue au niveau du corps de soupape (2) pour soulever le poussoir de soupape (3) du siège de soupape (26), le poussoir de soupape (3) étant situé complètement à l'intérieur de la liaison fluidique (24), **caractérisée en ce que** le poussoir de soupape peut être complètement entouré par une circulation de fluide.

2. Soupape électromagnétique (1) selon la revendication 1, **caractérisée en ce que** la surface d'étanchéité (30) du poussoir de soupape (3) est disposée à distance de l'aimant permanent (40).

3. Soupape électromagnétique (1) selon la revendication 1 ou 2, **caractérisée en ce que** le siège de soupape (26) est disposé entre la surface d'étanchéité (30) du poussoir de soupape (3) et l'aimant permanent (40) du poussoir de soupape (3).

4. Soupape électromagnétique (1) selon l'une quelconque des revendications précédentes, **caractérisée en ce que** la surface d'étanchéité (30) du poussoir de soupape (3) est précontrainte dans la direction du siège de soupape (26) pour interrompre un flux de fluide dans la liaison fluidique (24).

5. Soupape électromagnétique (1) selon la revendication 4, **caractérisée en ce que** le poussoir de soupape (3) est dimensionné et/ou orienté de telle sorte que sous l'effet de son propre poids, lorsque la bobine électromagnétique (5) n'est pas alimentée en courant, il interrompe le flux de fluide dans la liaison fluidique (24).

6. Soupape électromagnétique (1) selon la revendication 4 ou 5, **caractérisée en ce que** le poussoir de soupape (3) présente un deuxième aimant permanent (42) qui coopère avec un troisième aimant permanent (44) disposé sur le corps de soupape (2) et qui précontraint la surface d'étanchéité (30) du poussoir de soupape (3) dans la direction du siège de soupape (26).

7. Soupape électromagnétique (1) selon l'une quelconque des revendications précédentes, **caractérisée en ce que** le poussoir de soupape (3) est réalisé essentiellement en forme d'haltère, l'aimant permanent (40) étant disposé en aval de la surface d'étanchéité (30) du poussoir de soupape (3), et le deuxième aimant permanent (42) étant disposé en amont de la surface d'étanchéité (30) du poussoir de soupape (3).

8. Soupape électromagnétique (1) selon l'une quelconque des revendications précédentes, **caractérisée en ce qu'**elle est prévue pour fournir du gaz de précontrainte, du gaz de rinçage, pour une détente de pression, pour appliquer un vide, et/ou pour commuter un flux de produits pour un récipient (600) devant être rempli.

9. Organe de remplissage (6) pour une installation de distribution de boissons comprenant au moins une soupape de produit (60) pour commuter le flux de produits et/ou au moins une soupape de gaz (62, 64) pour commuter un flux de gaz,
**caractérisé en ce**
**qu'**au moins une soupape de produit (60) et/ou une soupape de gaz (62, 64) est/sont réalisée(s) par une soupape électromagnétique (1) selon l'une quelconque des revendications précédentes.
